# EUROPÄISCHE PATENTANMELDUNG

(11) **EP 1 916 417 A2**
(43) Veröffentlichungstag der Anmeldung: **30.04.2008**
(21) Anmeldenummer: 07118088.9
(22) Anmeldetag: 09.10.2007
(51) Int. Cl.: F03D 7/02, F03D 7/04

(54) **Ansteuerschaltung für Gleichstrommotor mit Bremse und Notbetriebversorgungseinrichtung**

(30) Priorität: 17.10.2006 DE 102006049490
(71) Anmelder: LTi REEnergy GmbH, 59423 Unna (DE)
(72) Erfinder: Bünte, Andreas, 33378, Rheda-Wiedenbrück (DE); Kauke, Lars, 58730, Fröndenberg (DE); Fedder, Dirk, 44791, Bochum (DE)
(74) Vertreter: Tappe, Hartmut

(57) **Zusammenfassung**

Die Erfindung betrifft eine Ansteuerschaltung und ein Verfahren zum Betrieb einer solchen Ansteuerschaltung für einen Gleichstrommotor (04) mit elektrisch betätigter Haltebremse (07), insbesondere für die Verstellung eines Rotorblatts einer Wind- oder Wasserkraftanlage. Die Ansteuerschaltung umfasst eine Notbetriebversorgungseinrichtung (03) und einen Dreibrücken-Wechselrichter (01). Hierbei ist die Notbetriebversorgungseinrichtung (03) über ein Notbetrieb-Netz-Schaltelement (12) mit dem Zwischenkreis (16, 17) des Dreibrücken-Wechselrichters (01) freischaltbar verbunden, der Gleichstrommotor (04) über ein Notbetrieb-Motor-Umschaltelement (13) entweder mit dem Dreibrücken-Wechselrichter (01) oder mit der Notbetriebversorgungseinrichtung (03) verbunden, und die Haltebremse (07) über ein Notbetrieb-Bremse-Umschaltelement (14) entweder mit dem Dreibrücken-Wechselrichter (01) oder mit der Notbetriebversorgungseinrichtung (03) verbunden. Mit Hilfe der Ansteuerschaltung kann ein äußerst günstig erhältliches Drehstrombauteil, ein Dreibrücken-Wechselrichter, als zentrale Komponente einer ausfallsicheren Ansteuerschaltung von Rotorstellvorrichtungen verwendet werden, dies reduziert die Kosten , Bauteil- und Verkabelungsaufwand für eine solche Schaltung und ermöglicht eine hohe schaltungstechnische Flexibilität. Die Ansteuerschaltung ermöglicht einen kontrollierten Betrieb sowohl im Normal- als auch in verschiedenen Notfallbetriebsarten.

## Beschreibung

Die Erfindung betrifft eine Ansteuerschaltung zum Betrieb eines Gleichstrommotors mit elektrisch betätigter Haltebremse, insbesondere für die Verstellung eines Rotorblatts einer Wind- oder Wasserkraftanlage, die eine Notbetriebversorgungseinrichtung und einen Dreibrücken-Wechselrichter umfasst. Des Weiteren betrifft die Erfindung ein Verfahren zum Betrieb einer solchen Ansteuerschaltung.

Ein Einsatzschwerpunkt der Ansteuerschaltung liegt im Bereich von Verstellmechanismen für Rotorblätter, wie sie beispielsweise in Wind- oder Wasserkraftanlagen eingesetzt werden. Sie dienen dazu, den Anstellwinkel eines oder mehrerer Rotorblätter gegenüber dem strömenden Antriebsmedium Luft oder Wasser so zu verändern, dass einerseits ein optimaler Wirkungsgrad der Energiegewinnungsanlage erreicht werden kann, andererseits im Störfall die Antriebsfläche des Rotorblatts gegenüber dem Antriebsstrom in eine neutrale Position (Fahnenstellung) geschwenkt werden kann, so dass die Energiegewinnungsanlage in Ruhestellung versetzt werden kann. Hierbei ergibt sich die Anforderung, dass die benötigte Ansteuerschaltung auch bei diversen Störfällen zumindest einen Notlaufbetrieb ermöglicht und eine Feststellung des Rotorblatts unterstützt. Der Einsatzbereich der Ansteuerschaltung ist nicht auf dieses Gebiet beschränkt, sie kann gleichwohl in anderen Bereichen der Technik eingesetzt werden.

In dem obengenannten Einsatzfall werden herkömmlicherweise Drehstrom- und/oder Gleichstrommotoren eingesetzt. Die hierzu verwendeten Ansteuerschaltungen umfassen im Fall von Drehstrommotoren Wechselrichter, beispielsweise Frequenzumrichter oder Servoregler, die Motordrehzahlen steuern können. Hierzu sind diese Wechselrichter für Asynchron- oder Synchrondrehstrommotoren in der Regel dreiphasig aufgebaut, wobei für jede Motorphase eine Halbbrücke zum Einsatz kommt, die typischerweise aus zwei Leistungstransistoren, z.B. Insulated Gate Bipolar Transistoren (IGBT) und gegebenenfalls zwei Freilaufdioden besteht. Für die Energieversorgung solcher drehstrombasierten Rotorblätterverstelleinrichtungen werden die drei Phasen des Stromnetzes beispielsweise über einen Brückengleichrichter in Gleichspannung gewandelt, und diese an die drei Halbbrücken des Wechselrichters geführt. Somit lassen sich in diesen bekannten Ansteuerschaltungen drei Spannungsarten unterscheiden: Die Netzspannung, die Zwischenkreis-gleichspannung, und die beliebig steuerbare Ausgangsspannung des Wechselrichters.

Aus dem Stand der Technik sind eine Vielzahl von Realisierungen und Varianten einer solchen Ansteuerschaltung bekannt. So ist es beispielsweise üblich, dass für die Verstellung von Rotorblättern sowohl Gleichstrom- als auch Drehstrommotoren eingesetzt werden können. Hierzu existiert der Vorschlag, dass für eine Verstelleinrichtung eines einzelnen Rotorblatts eine Vielzahl von Gleich- und/oder Drehstrommotoren eingesetzt werden. Im Fall des Einsatzes von Drehstrommotoren kann eine Brems- und Haltewirkung der Motoren auf das Rotorblatt mit Hilfe eines eingeprägten Gleichstroms in die Drehstrommotoren erreicht werden, so dass zusätzliche Haltebremsen eingespart werden können.

Daneben ist auch üblich, zur Stillsetzung eines elektrischen Antriebs mechanische Motorbremsen einzusetzen, die in vielen Fällen elektromagnetisch betätigt werden und an der Welle eines Motors angekoppelt sind. Solche elektromagnetisch betätigten Haltebremsen können mit Gleich- oder auch Wechselspannung im Bereich von Kleinspannung bis zur Netzspannung betrieben werden. Hierzu sind in vielen Realisierungsmöglichkeiten zusätzliche Komponenten notwendig, wie zum Beispiel Netzteil oder Kühleinrichtungen. Typischerweise blockieren die Haltebremsen im stromlosen Zustand und öffnen im bestromten Zustand. Zum Betrieb einer solchen Haltebremse sind in handelsüblichen Wechselrichtern, beispielsweise in Frequenzumrichtern oder Servoreglern spezielle Schaltkontakte für Kleinspannung vorgesehen, die die Ansteuerfunktion einer solchen Haltebremse unmittelbar unterstützen. In vielen Fällen ist jedoch eine externe Energiequelle zum Betrieb einer Haltebremse erforderlich, um die geforderte Betriebsspannung der Haltebremse zur Verfügung zu stellen. Diesbezüglich ist aus dem Stand der Technik bekannt, Haltebremsen mit pulsweitenmodulierten Ansteuerspannungen zu betreiben, um die zur Verfügung stehende Netzspannung, Zwischenkreisspannung oder Motorspannung für die eingesetzte Haltebremse anzupassen und die Haltebremse damit zu betreiben. Eine solche pulsweitenmodulierte Ansteuerung senkt die Anzahl notwendiger Zusatzbeschaltungen für das Bremsensystem, da keine zusätzliche Energiequelle oder Netzteile benötigt werden.

Gerade bei Antriebsvorrichtungen für Rotorblätter von Energiegewinnungsmaschinen ist ein hoher Grad an Störsicherheit unabdingbar. Es existieren Vorschläge, dass bei Eintritt eines Störfalls das Rotorblatt mit Hilfe einer Notbetriebversorgungseinrichtung in einen neutralen Zustand verfahren werden kann, so dass das Rotorblatt eine Fahnenstellung einnimmt, in dem es keinen Widerstand gegenüber dem strömenden Medium bietet. Hierzu existieren technische Realisierungen, die einen Gleichstrommotor zur Rotorverstellung einsetzen, der über eine Notbatterie im Störfall den Rotor in eine Fahnenstellung verschwenkt. Ausgehend von dieser Variante wurden Ansteuerschaltungen entwickelt, bei denen eine Notbetriebversorgungseinrichtung entweder direkt oder indirekt über eine Ansteuerschaltung / einen Umrichter mit dem Gleichstrommotor koppelbar ist. Solche Ansteuerschaltungen bieten den Vorteil, dass zum einen beim Ausfall des Wechselrichters der Gleichstrommotor direkt über die Notbetriebversorgungseinrichtung betrieben werden kann, zum anderen beim Betrieb über den Wechselrichter eine gezielte Steuerung des Motors, beispielsweise über eine Pulsweitensteuerung möglich ist. Eine Abwandlung dieses aus dem Stand der Technik bekannten Konzepts besteht darin, statt einem Gleichstrommotor einen Drehstrommotor einzusetzen. Hierbei kommt jedoch nur in Frage, die Betriebsspannung der Notbetriebversorgungseinrichtung über den Zwischenkreis des Wechselrichters einzukoppeln, da die Gleichspannung der Notbetriebversorgungseinrichtung zuerst in Drehstrom umgerichtet werden muss. In einem alternativen Konzept wird auf den Einsatz eines Wechselrichters verzichtet, so dass nur die Möglichkeit besteht, die Notbetriebversorgungseinrichtung direkt an einen Gleichstrommotor anschließbar zu machen.

Schließlich ist aus dem Stand der Technik bekannt, dass für eine Verstellvorrichtung eines Rotorblatts ein Gleichstrommotor mit Reihenschluss- und Nebenschlusswicklung verwendet wird, der über einen Dreibrücken-Wechselrichter, wie er üblicherweise für die Ansteuerung von Drehstrommotoren eingesetzt wird, angesteuert wird.

Die oben dargestellten Realisierungsmöglichkeiten für Ansteuerschaltungen, insbesondere für die Verstellungen von Rotorblättern von Wind- oder Wasserkraftanlagen, lösen bestimmte Aufgaben solcher Verstellvorrichtungen und erfordern hierzu eine Vielzahl spezialisierter Komponenten und besonderer Schaltungstechniken.

So erfordert beispielsweise die Verwendung von Drehstrommotoren für eine Verstellvorrichtung und Realisierung der Haltefunktion durch eine Gleichstrombestromung der Drehstrommotoren eine spezielle Schaltung zur Bereitstellung der Gleichspannung sowie eine spezielle Steuerung, die die Umschaltung zwischen Drehstrombetrieb und Haltestrombetrieb durchführt. Nachteilig bei einer Gleichstrombestromung eines Drehstrommotors ist die beschränkte und oft zu geringe Halte- und Bremswirkung im Haltestrombetrieb. Des Weiteren ist ein solche Bremsenrealisierung nicht eigensicher, d.h. im Störfall, beispielsweise bei einem Motordefekt, besteht die Gefahr, dass die Halte- und Bremswirkung völlständig ausfällt, so dass das Rotorblatt sich unkontrolliert bewegt und weitere Schäden verursachen kann.

Aus diesem Grund ist es bekannt, separate Haltebremsen einzusetzen, die ausreichend hohe Brems- und Haltekräfte ausüben können und eine höhere Eigensicherheit bieten. Die Steuerung dieser separaten Haltebremsen durch im Regelfall pulsweitenmodulierte Steuerspannungen erfordert jedoch zusätzliche Bauteile, die die pulsweitenmodulierten Spannungen erzeugen, sowie eine separate Steuerungsvorrichtung, die die Haltebremse ansteuert.

Die Kombination von Antriebsvorrichtung mit Hilfe von Drehstrommotoren und Notbetriebversorgungseinrichtungen, die üblicherweise nur Gleichspannung zur Verfügung stellen, erfordert den Einsatz eines äußerst zuverlässigen und störungssicheren Gleichstrom-Wechselstromrichters und erhöht dadurch die Gesamtkosten der Ansteuerschaltung.

Hierzu ist es bekannt, einen Gleichstrommotor über einen Wechselrichter, bei dem eine Notbetriebversorgungseinrichtung sowohl direkt an den Gleichstrommotor, als auch indirekt über den Wechselrichter an den Gleichstrommotor angelegt werden kann, zu betreiben. Jedoch erfordert eine solche Ansteuerschaltung die Entwicklung und Realisierung eines speziellen Wechselrichters für Gleichstrombetrieb, der zumeist zwei Halbbrücken umfasst. Es ergibt sich des Weiteren das Probleme, dass für eine in vielen Fällen notwendige Haltebremse in diesem Konzept nicht integriert vorgesehen ist.

Alternativ hierzu erlaubt ein Konzept, das die Notbetriebversorgungseinrichtung im Fehlerfall lediglich direkt an den Gleichstrommotor koppelt, keine definierte Steuerung des Gleichstrommotors, so dass der Notbetrieb der Verstelleinrichtung nur durch ein binäres Ein- oder Ausschalten des Gleichstrommotors vorgenommen werden kann.

Schließlich ermöglicht der Betrieb eines Gleichstrommotors mit Reihen- und Nebenschlusswicklung über einen Dreibrücken-Wechselrichter zwar den Betrieb eines Gleichstrommotors, jedoch nicht die Verwendung einer zusätzlichen Haltebremse oder weiterer Aktoren, ohne das hierfür eine separate Ansteuerschaltung hinzugefügt werden muss.

Ausgehend von diesem oben genannten Stand der Technik ist es die Aufgabe der vorliegenden Erfindung, eine Ansteuerschaltung zum Betrieb eines Gleichstrommotors mit elektrisch betätigter Haltebremse, die eine Notbetriebversorgungseinrichtung und einen Dreibrücken-Wechselrichter umfasst, vorzuschlagen, die die oben genannten Nachteile des Stands der Technik überwindet, und dabei eine preisgünstige, flexible und robuste Ansteuerung einer Rotorverstelleinrichtung sowohl im Normal- als auch im Notfallbetrieb ermöglicht. Des weiteren ist es Aufgabe der Erfindung, einen kontrollierten Betrieb der Ansteuerschaltung zur Ansteuerung von Motor und Haltebremse sowohl im Normal- als auch im Notbetrieb bei minimaler schaltungstechnischer Komplexitiät und niedriger Bauteilzahl zu ermöglichen. Eine weitere Aufgabe der Erfindung ist es, eine Ansteuerschaltung vorzuschlagen, die eine zentralen Steuerung- und Überwachung bei niedrigem Verkabelungsaufwand ermöglicht.

Diese Aufgabe wird durch eine Ansteuerschaltung nach der Lehre des Patentanspruchs 1 und ein Verfahren zum Betrieb einer solchen Ansteuerschaltung nach der Lehre des Patentanspruchs 30 gelöst.

Vorteilhafte Ausgestaltungen der Erfindung sind Gegenstand der Unteransprüche.

Die erfindungsgemäße Ansteuerschaltung ist dadurch gekennzeichnet, dass die Notbetriebversorgungseinrichtung über ein Notbetrieb-Netz-Schaltelement mit dem Zwischenkreis des Dreibrücken-Wechselrichters freischaltbar verbunden ist, dass der Gleichstrommotor über ein Notbetrieb-Motor-Umschaltelement entweder mit dem Dreibrücken-Wechselrichter oder mit der Notbetriebversorgungseinrichtung verbunden ist, und dass die Haltebremse über ein Notbetrieb-Bremse-Umschaltelement entweder mit dem Dreibrücken-Wechselrichter oder mit der Notbetriebversorgungseinrichtung verbunden ist. Die Ansteuerschaltung dient der Steuerung und Regelung eines Gleichstrommotors für die Verstellung eines Rotorblatts mit zugehöriger elektrisch betätigter Haltebremse und ermöglicht einen Betrieb bei beispielsweise kurzzeitigem Ausfall der Versorgungsspannung über eine Notbetriebversorgungseinrichtung sowohl direkt, als auch über die Umrichter-Elektronik. Dabei wird in der Umrichter-Elektronik ein Standard-Dreibrücken-Wechselrichter eingesetzt, der üblicherweise bei Drehstrommotoren verwendet wird und damit in einer großen Vielzahl für verschiedene Leistungsbereiche sehr kostengünstigen verfügbar ist. Somit verzichtet die Schaltung bei einer sehr hohen Flexibilität an möglichen Schaltungsvarianten auf Spezialbauteile und realisiert ihre Funktionsfähigkeit lediglich mit Hilfe von kostengünstig verfügbaren Standardbauteilen. Prinzipiell besteht die erfindungsgemäße Ansteuerungsschaltung aus einem Gleichstrommotor, einer Haltebremse, und einer Notbetriebversorgungseinrichtung, die zusammen an einen Dreibrücken-Wechselrichter angeschlossen sind. Dabei ist die Notbetriebversorgungseinrichtung über ein Notbetrieb-Netz-Schaltelement direkt mit dem Zwischenkreis des Dreibrücken-Wechselrichters verbunden, so dass sie zum einen Spannung über den Zwischenkreis zum Betrieb und zur Aufladung erhalten als auch Spannung an den Zwischenkreis liefern kann. Der Gleichstrommotor ist über ein Notbetrieb-Motor-Umschaltelement entweder mit dem Dreibrücken-Wechselrichter verbunden, oder beispielsweise im Notbetrieb, durch umschalten des Notbetrieb-Motor-Umschaltelement direkt oder eventuell indirekt über ein Anpassungsnetzwerk mit der Notbetriebversorgungseinrichtung verbunden. Die Haltebremse ist über ein Notbetrieb-Bremse-Umschaltelement entweder direkt mit dem Dreibrücken-Wechselrichter, oder durch Umschalten des Umschaltelements mit der Notbetriebversorgungseinrichtung verbunden - ebenfalls wieder direkt oder über ein Anpassungsnetzwerk. Somit existieren verschiedene Betriebsmöglichkeiten der Ansteuerschaltung. Im Normalbetrieb verbindet das Notbetrieb-Motor-Umschaltelement den Gleichstrommotor direkt mit dem Dreibrücken-Wechselrichter, und das Notbetrieb-Bremse-Umschaltelement die Haltebremse direkt mit dem Dreibrücken-Wechselrichter. Tritt beispielsweise eine Störung der Netzspannung auf, so kann durch das Netz-Schaltelement die Notbetriebversorgungseinrichtung Spannung über das geschlossene Netz-Schaltelement an den Zwischenkreis liefern, so dass in diesem Fall die Notbetriebsversorgungseinrichtung über das Netz-Schaltelement und den Dreibrücken-Wechselrichter den Gleichstrommotor und die Haltebremse betreibt. Hierbei werden die Umschaltelemente nicht betätigt. In einem anderen Störfallszenario könnte der Dreibrücken-Wechselrichter ausfallen, beispielsweise durch einen Blitzschlag, und das Notbetrieb-Motor-Umschaltelement den Gleichstrommotor und das Notbetrieb-Bremse-Umschaltelement die Haltebremse direkt oder über ein Anpassungsnetzwerk mit der Notbetriebversorgungseinrichtung verbinden, so dass bei Ausfall des Wechselrichters eine Notverstellung des Rotorblatts zum Beispiel in eine Fahnenstellung durch Energieversorgung über die Notbetriebsversorgungseinrichtung gewährleistet werden kann.

Prinzipiell ist der innere Aufbau der Notbetriebsversorgungseinrichtung beliebig. Eine vorteilhafte Ausführung einer Notbetriebsversorgungseinrichtung kann dabei eine oder mehrer Batterien umfassen, die im Fall eines Störfalls die Antriebsvorrichtung mit Energie versorgt. Batterien sind sehr günstig in vielen Leistungsvarianten vorhanden und verfügen über eine hohe Lebensdauer.

Alternativ zum Einsatz einer oder mehrerer Batterien kann in der Notbetriebversorgungseinrichtung eine aufladbare Gleichspannungsquelle enthalten sein, insbesondere eine oder mehrer Akkumulatoren, Kondensatoren oder ähnliches. Diese dienen beispielsweise bei der Überbrückung von kurzzeitigen Spannungseinbrüchen oder Spannungsausfällen dazu, dass die Antriebsvorrichtung zumindest in eine neutrale Stellung verfahren werden kann, im Falle einer Rotorantriebsvorrichtung in eine Fahnenstellung. Eine aufladbare Gleichspannungsquelle bietet insbesondere den Vorteil der Wartungsfreiheit über längere Zeit und der Regenerationsaufladung nach einem vorhergehenden Störfall.

Beinhaltet die Notbetriebsversorgungseinrichtung eine aufladbare Energiequelle, so ist es besonders vorteilhaft, dass sie über das Notbetrieb-Netz-Schaltelement aufgeladen werden kann. Bei einem geschlossenen Notbetrieb-Netz-Schaltelement ist die Notbetriebversorgungseinrichtung mit dem Zwischenkreis des Dreibrücken-Wechselrichters verbunden und kann somit Gleichspannung zur Aufladung der Energiequelle verwenden. Dies ermöglicht einen über lange Zeiträume hinweg wartungsfreien Betrieb der Notbetriebsversorgungseinrichtung. Hierzu kann der aufladbaren Gleichspannungsquelle ein Anpassungsnetzwerk vorgeschaltet sein, um eventuelle Spannungsanpassungen und/oder Überlastschutzfunktionen zwischen Zwischenkreis und Gleichspannungsquelle durchzuführen bzw. auszuüben.

Im Fall eines Ausfalls des Versorgungsnetzes ist es durchaus vorstellbar und vorteilhaft, dass die Notbetriebversorgungseinrichtung über das geschlossene Notbetrieb-Netz-Schaltelement rückwärtig, direkt oder über weiter Anpassungsbauteile gekoppelt, den Zwischenkreis des Dreibrücken-Wechselrichters versorgen kann. Somit ist sichergestellt, dass bei einem Ausfall der externen Energieversorgung die Antriebsvorrichtung ohne Beeinflussung ihrer Funktionalität über den Wechselrichter gesteuert werden kann und somit der gesamte Komfort der Schaltung auch im Fall eines Netzausfalls genutzt werden kann. In dieser Variante ist ein störungsfreier Betrieb der Rotorverstellvorrichtung auch bei Netzausfall möglich, darüber hinaus ermöglicht eine solche Betriebsart eine sichere und reibungslose Überführung des Rotors in eine neutrale Stellung, zum Beispiel Fahnenstellung unter Verwendung der Steuerungsmöglichkeit des Wechselrichters.

Die Überwachung, Steuerung und Regelung der Ansteuerschaltung kann beliebig realisiert werden. In einer besonders einfachen und vorteilhaften Ausgestaltung der Erfindung umfasst die Ansteuerschaltung eine zentrale Überwachung und Steuervorrichtung, die mit mindestens einem der Schaltelemente Notbetrieb-Netz-Schaltelement, Notbetrieb-Motor-Umschaltelement und/oder Notbetrieb-Bremse-Schaltelement verbunden ist, und zumindest eine der Funktionen Energiezufuhr der Notbetriebsversorgungseinrichtung zu- und von dem Zwischenkreis des Wechselrichters, Energiezufuhr des Gleichstrommotors, Energiezufuhr der Haltebremse realisiert. In diesem Zusammenhang wird von einer Steuervorrichtung gesprochen, die jedoch auch Regelungsaufgaben übernehmen kann und eventuell auch die Steuerung/Regelung des Dreibrücken-Wechselrichters übernehmen kann. Die Notbetriebversorgungseinrichtung stellt eine zentrale Komponente der Ansteuerschaltung dar, und ermöglicht durch verschiedene Stellungen der Schalt- und Umschaltelemente verschiedene Betriebsarten der Ansteuerschaltung. Aus diesem Grund liegt es nahe, die übergeordnete Überwachungs- und Steuervorrichtung, die die Stellung der Schalt- und Umschaltelemente zur Realisierung der verschiedenen Schaltungskonfigurationen der Ansteuerschaltung steuert, in der Notbetriebversorgungseinrichtung unterzubringen. So können die verschiedenen Stellungsmöglichkeiten der Schalt- und Umschaltelemente von einer zentralen Stelle aus gesteuert werden, und durch definierte Abstimmung der einzelnen Zustände der Stellglieder das Verhalten der Ansteuerschaltung bestimmt werden. Insbesondere sollte die Überwachung und Steuervorrichtung in der Lage sein, die Notbetriebversorgungseinrichtung abzuschalten, um zum einen eine Überlast zu verhindern, zum anderen im Notbetrieb oder im Falle einer Störung von Motor oder Haltebremse diese im Notbetrieb stillzulegen, d.h. von der Versorgungsspannung zu trennen.

Ist eine zentrale Überwachungs- und Steuervorrichtung vorgesehen, so bietet es sich an, dass diese neben der Steuerung der oben angesprochenen Schalt- und Umschaltelemente mit dem Dreibrücken-Wechselrichters verbunden ist, um diesen zu steuern. Somit steuert die Überwachungs- und Steuerungsvorrichtung neben einzelnen Versorgungsbetriebsarten von Gleichstrommotor und Haltebremse auch die einzelnen Leistungsschaltelemente des Dreibrücken-Wecselrichters, so dass ihr die gesamte Steuerung der Ansteuerschaltung obliegt. Durch eine solche zentrale Steuervorrichtung wird der Bauteilaufwand erheblich reduziert und die Kabelführung vereinfacht, des Weiteren ist ein kontrollerter Betrieb der Gesamtschaltung möglich. So ist es beispielsweise Denkbar, vor Umschaltung der Versorungsspannungen von Normal- auf Notfallbetrieb die Ansteuerspannungen des Motors und der Bremse kontrolliert zu steuern, um ein reibungsloses Umschalten zu gewährleisten.

Die Überwachungs- und Steuervorrichtung kann in der Regel als eigene Schaltungskomponente ausgeführt und in der Ansteuerschaltung untergebracht werden. Jedoch ist es vorteilhaft möglich, diese in der Notbetriebversorgungseinrichtung zu integrieren, insbesondere um eine Nachrüstung bestehender Anlagen zu vereinfachen, den Verkabelungsaufwand zu reduzieren und die Anzahl der Komponenten gering zu halten.

Die Verwendung einer Überwachungs- und Steuervorrichtung, die alle Komponenten der Ansteuerschaltung steuert, eröffnet die Möglichkeit, alle Daten der Ansteuerschaltung wie Betriebszustand, Funktionsstörung, etc an einer zentralen Stelle zu sammeln. Da eine erhöhte Sicherheit der Ansteuerschaltung im Vordergrund steht ist es vorteilhaft, dass die Überwachungs- und Steuervorrichtung des Weiteren eine Fernmeldeeinrichtung zum Empfang und Senden von Informationen an eine Fernüberwachungs- und Steuerungsstelle umfasst. Diese kann die Daten der Ansteuerschaltung weiterleiten oder von der Fernüberwachungs- und Steuerungsstelle empfangene Instruktionen ausführen und erhöht somit die Betriebssicherheit der Ansteuerschaltung.

In einer besonders ausgezeichneten Ausführungsform der Ansteuerschaltung ist der Gleichstrommotor über das Notbetrieb-Umschaltelement mit zwei Halbbrücken des Dreibrücken-Wechselrichters verbunden. In der Regel weist ein Gleichstrommotor zwei Motoranschlussklemmen auf. Der Dreibrücken-Wechselrichter umfasst dabei drei einzelne Halbbrücken, und weist somit drei Motorklemmen U, V und W für den Anschluss eines Drehstrommotors auf. Es ist durchaus denkbar, eine Klemme des Gleichstrommotors an einer Halbbrücke und die zweite Klemme des Gleichstrommotors an ein Zwischenkreispotential anzuschließen, dabei ist es beliebig, ob das positive oder negative Potential des Zwischenkreises verwendet wird, jedoch wäre in diesem Fall für eine Drehrichtungsumkehr eine zusätzliche Polwendeschaltung notwendig. Somit bietet die Möglichkeit, die beiden Klemmen des Gleichstrommotors mit zwei Halbbrücken des Dreibrücken-Wechselrichters zu verbinden, eine maximale Flexibilität beim Betrieb des Gleichstrommotors, hinsichtlich Leistungs- und Drehrichtungssteuerung. So kann durch eine freie Wahl des Tastverhältnisses der Transistoren der Halbbrücke jeder beliebige zeitliche Mittelwert der Spulenspannung zwischen null und der vollen Zwischenkreisspannung eingestellt werden, und durch gezieltes Ansteuern der einzelnen Leistungsschaltelemente der beide Halbbrücken die Polarität der Motorspannung umgeschaltet werden.

Prinzipiell kann die Haltebremse an jeden beliebigen Anschluss des Wechselrichters und/oder des Zwischenkreises angeschlossen werden. In einem besonders ausgezeichneten Ausführungsbeispiel ist zumindest ein Anschluss der Haltebremse über das Notbetrieb-Bremse-Umschaltelement mit einem Zwischenkreispotential verbunden.

Des Weitern ist es dabei bevorzugt möglich, dass zumindest ein Anschluss der Haltebremse über das Notbetrieb-Bremse-Umschaltelement mit einer Halbbrücke des Dreibrücken-Wechselrichters verbunden ist. Fasst man diese beiden Schaltungsmöglichkeiten zusammen, so wird die Haltebremse über das Notbetrieb-Bremse-Umschaltelement zum einen mit einem der beiden Zwischenkreispotentiale verbunden, und zum anderen mit einer Halbbrücke des Dreibrücken-Wechselrichters verbunden. Somit ist die Haltebremse über eine Halbbrücke des Dreibrücken-Wechselrichters steuerbar. Dabei ist es prinzipiell beliebig, an welche der beiden Zwischenkreispotentiale - positives oder negatives Potential - die Haltebremse angeschlossen ist. Wiederum kann durch eine freie Wahl des Tastverhältnisses der Transistoren der Halbbrücke jede beliebige Spannung zwischen null und der vollen Zwischenkreisspannung zur Ansteuerung der Haltebremse verwendet werden. Es bleibt hierbei freigestellt, ob die Haltebremse exklusiv an eine Halbbrücke angeschlossen wird, oder ob an dieser Halbbrücke bereits andere Verbraucher, insbesondere der Gleichstrommotor angeschlossen ist.

Bezüglich der Ansteuerung der Haltebremse ist es vorteilhaft möglich, dass die Halbbrücke des Dreibrücken-Wechselrichters, die mit der Halbbremse verbunden ist, unabhängig von den beiden Halbbrücken des Dreibrücken-Wechselrichters ist, die mit dem Gleichstrommotor verbunden ist. Somit erhält man eine maximale Flexibilität in der Ansteuerung von Gleichstrommotor und Haltebremse, so dass für beide Energieverbraucher unterschiedliche Betriebszustände und Betriebsspannungen eingestellt werden können.

Alternativ zu der oben beschriebenen Ansteuerung der Haltebremse ist es auch durchaus denkbar, dass die Halbbrücke des Dreibrücken-Wechselrichters, die mit der Haltebremse verbunden ist, eine der Halbbrücken des Dreibrücken-Wechselrichters ist, die mit dem Gleichstrommotor verbunden sind. Somit teilen sich Gleichstrommotor und Haltebremse eine Halbbrücke des Dreibrücken-Wechselrichters, so dass eine verbleibende Halbbrücke zur freien Verfügung steht und zusätzliche Schaltungs- und Reglungsaufgaben erfüllen kann.

In einigen Fällen erfordert der Betrieb einer Haltebremse zusätzliche Bauteile, insbesondere Schutzbeschaltungen, daher ist es in einem ausgezeichneten Ausführungsbeispiel vorteilhaft, dass parallel und/oder in Reihe zur Haltebremse weitere Bauelemente, insbesondere eine Haltebremseschutzbeschaltung geschaltet ist. Durch solch eine Schutzbeschaltung können beispielsweise Überlastungen der Haltebremse verhindert, Überspannungen kompensiert oder Überströme verhindert werden.

Ist die Haltebremse an mindestens einer Halbbrücke des Dreibrücken-Wechselrichters angeschlossen, so ist es besonders vorteilhaft, dass die Haltebremse beim Betrieb über den Wechselrichter mit einem zeitlich veränderlichen Spannungsmittelwert, insbesondere mit einer pulsweitenmodulierten Spannung betrieben wird. Somit lässt sich durch eine freie Wahl des Taktverhältnisses der Transistoren der Halbbrücke ein zeitlich beliebig einspielbarer Mittelwert der Spulenspannung einstellen, der jeden beliebigen Wert zwischen null und der vollen Zwischenkreisspannung annehmen kann. Somit eröffnet sich die Möglichkeit, Haltebremsen mit beliebigen Nennspannungen zu verwenden, insbesondere kostengünstige Kleinspannungshaltebremsen einzusetzen.

Zur Erhöhung der Flexibilität und besseren Kontrolle der Ansteuerschaltung ist es vorteilhaft möglich, dass die Ansteuerschaltung des Weiteren mindestens eine Strommesseinrichtung umfasst. Diese Strommesseinrichtung kann an beliebigen Stellen der Ansteuerschaltung eingesetzt werden und überwacht den fließenden Strom, der Rückschlüsse auf das Betriebsverhalten der Gesamtschaltung oder einzelner Schaltungsbereiche zulässt. Hierzu ist es durchaus denkbar, die Strommesseinrichtung in dem Dreibrücken-Wechselrichter zu integrieren, dies erhöht die Betriebssicherheit und reduziert die schaltungstechnische Komplexität der Ansteuerschaltung.

Wird mindestens eine Strommesseinrichtung in der Ansteuerschaltung verwendet, so ist es möglich und vorteilhaft, dass die Strommesseinrichtung mit einer Überwachungs- und Steuervorrichtung zur Steuerung des Wechselrichters und/oder des Notbetrieb-Netz-Schaltelements, und/oder des Notbetrieb-Motor-Umschaltelements und/oder des Notbetrieb-Bremse-Umschaltelements verbunden ist. Somit können durch Analyse des von der Strommesseinrichtung erfassten Stroms die Schalt- und Umschaltelemente geschaltet werden, so dass eine Regelung der Ansteuerschaltung in Abhängigkeit des Stroms ermöglicht wird. Beispielsweise kann durch Überwachung des Netzstromes durch die Überwachungs- und Steuervorrichtung, die beispielsweise in der Notbetriebversorgungseinrichtung untergebracht sein kann, ein Ausfall der Netzversorgung erkannt werden, so dass dann die Notbetriebversortungseinrichtung über das Netz-Schaltelement rückwärtig den Dreibrücken-Wechselrichter mit Spannung versorgt, und somit die Antriebsvorrichtung mit Energie versorgt. Des Weiteren kann durch gezieltes Überwachen von Strömen innerhalb des Wechselrichters ein Ausfall des Wechselrichters erkannt werden, so dass die Notbetriebversorgungseinrichtung eine Umschaltung der Energieversorgung von Gleichstrommotor und Haltebremse auf Direktversorgung durch die Notbetriebversorgungseinrichtung einleitet. Denkbar ist auch eine Überwachung des Motor- oder Haltebremsenstroms, so dass diese bei Ausfall oder Überlast von der Versorgungsspannungen getrennt werden können.

Insbesondere ermöglicht der Einsatz einer Strommesseinrichtung besonders vorteilhaft den Strom der Haltebremse zu messen, so dass eine Regelung des Ansteuerstroms der Haltebremse durch die Überwachungs- und Steuervorrichtung möglich ist. Der Strom der Haltebremse gibt einen Rückschluss auf Kräfte, die auf die Bremse wirken, zum Beispiel erhöhte Windlast, oder auf Überlastung der Haltebremse. Durch eine gezielte Überwachung des Haltebremsenstroms kann somit die Antriebsvorrichtung so beeinflusst werden, dass beispielsweise der Rotor einer Energiekraftanlage in eine günstigere Winkelposition oder in eine neutrale Position, zum Beispiel Fahnenstellung, verfahren werden kann, oder dass rechtzeitig der Ausfall der Haltebremse erkannt werden kann. Die Messung des Haltebremsenstroms kann des Weiteren durch Vergleich mit Sollprofilen den Alterungsgrad bzw, den Verschleiß der Bremse dokumentieren. Des Weiteren gibt sie einen Hinweis auf den Betriebszustand der Bremse, z.B. ob die Bremse tatsächlich gelüftet hat und dient als Indikator für ein Fehlverhalten. Die Auswertung der von den Strommesseinrichtungen gelieferten Messdaten dient somit direkt zur Überwachung und Steuerung der Ansteuerschaltung und kann durch Vergleich mit Sollprofilen Funktionszustand, Fehlfunktion, Alterung, Abnutzung, Belastung und ähnliches des Gleichstromotors und/oder der Haltebremse erkennen.

Die innere Ausführung des Gleichstrommotors ist prinzipiell beliebig, man unterscheidet herkömmlicherweise grundsätzlich zwischen Reihen-, Neben-, Compound-, oder fremderregten Gleichstrommotoren. Besonders vorteilhaft ist der Gleichstrommotor der Ansteuerschaltung dadurch ausgestattet, dass er einer Motornebenschlusswicklung umfasst. Der Gleichstrommotor kann dabei beispielsweise ein Reihenschlussmotor sein, der eine zusätzliche Nebenschlusswicklung aufweist und somit beispielsweise in Form eines Compoundmotors betrieben werden kann.

Weist der Gleichstrommotor eine Nebenschlusswicklung nach oben aufgeführte Alternative aus, so ist es besonders vorteilhaft, wenn die Motornebenschlusswicklung parallel zur Haltebremse geschaltet ist. Somit ist die Nebenschlusswicklung nur dann in Betrieb, wenn sich die Haltebremse im bestromten Zustand, also im offenen Zustand, befindet.

Die Nebenschlusswicklung kann dabei das Anzugsmoment des Gleichstrommotors erhöhen oder verbessern, insbesondere wenn die Bemessungsspannung der Nebenschlusswicklung mit der Bemessungsspannung der Magnetspule der Haltebremse übereinstimmt. Dabei ist ein preiswerter Betrieb der Haltebremse ohne weitere Vorrichtungen möglich.

Eine separate Nebenschlusswicklung des Gleichstrommotors ermöglicht des Weiteren einen Betrieb des Motors als fremderregter Motor, in dem die Motornebenschlusswicklung als fremderregte Wicklung des Gleichstrommotors geschaltet ist. Damit eröffnet der Gleichstrommotor Betriebsmerkmale, die einem fremderregten Motor ähneln.

Als mögliche weitere Schaltungsalternative einer Nebenschlusswicklung an den Gleichstrommotor kann die Motornebenschlusswicklung zwischen einem Anschluss des Gleichstrommotors und einem Anschluss der Haltebremse gestaltet werden. Somit ist das Verhalten der Nebenschlusswicklung von der Ansteuerung des Gleichstrommotors und der Ansteuerung der Haltebremse abhängig, so dass beispielsweise bei unbestromter Haltebremse die Nebenschlusswicklung außer Betrieb gesetzt ist, und bei niedrigen Spannungen des Motors die Nebenschlusswicklung ein geringes Magnetfeld erzeugt.

In vielen Fällen werden beim Betrieb von neben- oder fremderregten Spulen eines Gleichstrommotors Zusatzbeschaltungen benötigt. Aus diesem Grund ist es besonders vorteilhaft, dass zusätzliche Bauelemente in Reihe und/oder parallel zur Motornebenschlusswicklung geschaltet werden.

Des Weiteren ist es durchaus möglich und vorstellbar, dass der Gleichstrommotor in seinem Inneren ein Feldgleichrichter umfasst, der insbesondere vor der Reihenschlusswicklung eines Gleichstrommotors geschaltet ist. Somit ermöglicht ein Feldgleichrichter die Verwendung eines Reihenschlussgleichstrommotors im 4-Quadranten-Betrieb, so dass zum Beispiel beim Lauf des Motors ein Abbremsen oder ein zusätzliches Beschleunigen ermöglicht wird.

Der Dreibrücken-Wechselrichter entspricht erfindungsgemäß einem Standardwechselrichter wie er für Drehstrommaschinen, beispielsweise bei für Asynchron- oder Synchronmaschinen, eingesetzt wird. Besonders vorteilhaft, da kostengünstig erhältlich, ist die Verwendung eines Dreibrücken-Wechselrichters, der Teil eines Spannungszwischenkreisumrichters oder Servoreglers ist. Solche Servoregler oder Spannungszwischenkreisumrichter sind auf dem Markt in hoher Stückzahl, dadurch besonders kostengünstig, verfügbar, sind sehr zuverlässig, langlebig und stellen einen Industriestandard dar.

In einer besondern Ausführungsform zeichnet sich der Aufbau der Halbbrücken des Wechselrichters dadurch aus, dass mindestens zwei Insulated Gate Bipolar Transistoren (IGBTs) als Leistungsschaltelemente verwendet werden. IGBTs zeichnen sich durch einen extrem geringen Eigenverbrauch bei hohen schaltbaren Leistungen aus, und sind de facto Standard in der Leistungselektronik bei Ansteuerung von Gleich-, Wechsel- und Drehstrommaschinen.

Die oben beschriebenen Komponenten der Ansteuerschaltung eröffnen eine Vielzahl denkbarer Betriebszustände. Grundsätzlich können in einem Verfahren zum Betrieb der Ansteuerschaltung drei Basis-Betriebsarten unterschieden werden: der Normalbetrieb mit Energieversorgung durch das Netz, ein erster Notbetrieb mit uneingeschränkter Funktionalität der Ansteuerschaltung und ein zweiter Notbetrieb mit eingeschränkter Funktionalität der Ansteuerschaltung, da eine Steuerung über den Dreibrücken-Wechselrichter nicht stattfindet. In den Notbetriebsarten erfolg die Energieversorgung der Ansteuerschaltung über die Notbetriebversorungseinrichtung. Nachfolgend wird ein vorteilhaftes schaltungstechnisches Verfahren zur Einstellung der drei Betriebsarten dargelegt:
- Normalbetrieb: Das Notbetrieb-Netz-Schaltelement ist bedarfsweise zur Aufladung der Notbetriebsversorgungseinrichtung durch den Zwischenkreis geschlossen und ansonsten geöffnet. Das Notbetrieb-Motor-Umschaltelement verbindet den Gleichstrommotor mit dem Dreibrücken-Wechselrichter, und das Notbetrieb-Bremse-Umschaltelement verbindet die Haltebremse mit dem Dreibrücken-Wechselrichter;
- Erster Notbetrieb: Im ersten Notbetrieb bleibt der Dreibrücken-Wechselrichter funktionsfähig und wird dazu verwendet Motor und Bremse anzusteuern. Hierzu ist das Notbetrieb-Netz-Schaltelement geschlossen, um den Zwischenkreis mit Spannung zu versorgen. Das Notbetrieb-Motor-Umschaltelement verbindet den Gleichstrommotor mit dem Dreibrücken-Wechselrichter, und das Notbetrieb-Bremse-Umschaltelement verbindet die Haltebremse mit dem Dreibrücken-Wechselrichter ;
- Zweiter Notbetrieb: Im zweiten Notbetrieb wird der Dreibrücken-Wechselrichter umgangen, d.h. Motor und Bremse werden direkt von der Notbetriebversorgungseinrichtung mit Energie versorgt. Das Notbetrieb-Netz-Schaltelement ist geöffnet. Das Notbetrieb-Motor-Umschaltelement verbindet den Gleichstrommotor mit der Notbetriebversorgungseinrichtung, und das Notbetrieb-Bremse-Umschaltelement verbindet die Haltebremse mit der Notbetriebversorgungseinrichtung.

Mit Hilfe des oben skizzierten Verfahrens lassen sich somit drei Grundbetriebsarten unterscheiden, die in möglichen Störsituationen (Ausfall Netz - Erster Notbetrieb, Ausfall Wechselrichter und/ oder Netz - Zweiter Notbetrieb) einen robusten Notbetrieb der Ansteuerschaltung ermöglichen. Jedoch sind Abweichungen hierzu denkbar, so kann beispielsweise der Gleichstrommotor direkt von der Nobetriebversorgungseinrichtung gespeist werden, während die Haltebremse noch über den Dreibrücken-Wechselrichter gesteuert werden kann und umgekehrt.

Die Durchführung des oben dargestellten Verfahrens zum Betrieb der Ansteuerschaltung ist von einer Steuereinrichtung durchzuführen. Dazu bietet es sich an, dass der Steuerungsablauf von der bereits weiter oben genannten Überwachungs- und Steuervorrichtung vorgenommen wird, so dass diese die Steuerung der einzelnen Betriebsarten Normalbetrieb, erster Notbetrieb und zweiter Notbetrieb vornimmt.

Die Überwachungs- und Steuervorrichtung kann daneben in vorteilhafter Weise die Steuerung der Leistungsschaltelemente der Halbbrücken des Dreibrücken-Wechselrichters vornehmen. Somit stellt sie die zentrale Überwachungs- und Steuervorrichtung dar, die neben der Betriebsartumschaltung auch die Steuerung des Dreibrücken-Wechselrichters übernimmt und somit einen Ausfall dieses Bauteils detektieren und eine Betriebsartumschaltung vornehmen kann. Dies reduziert zusätzliche Steuerungskomponenten und erleichtert die Realisierung der Schaltung.

In einem ausgezeichneten Ausführungsbeispiel umfasst die Ansteuerschaltung Strommesseinrichtungen. In diesem Fall kann in einer vorteilhaften Ausführung die Steuerung der Leistungsschaltelemente unter Berücksichtigung der Messdaten mindestens einer Strommesseinrichtung vorgenommen werden. Durch Berücksichtigung des aufgenommenen Stroms kann der Ausfall von Schaltungskomponenten, Überlastung oder andere relevante Größen von der Überwachungs- und Steuervorrichtung erkannt werden und eine Betriebsartumschaltung bewirken. Daher liegt es nahe, dass die Auswahl der einzelnen Betriebsarten Normalbetrieb, erster Notbetrieb und zweiter Notbetrieb unter Berücksichtigung der Messdaten mindestens einer Strommesseinrichtung vorgenommen wird.

Ausgehend von einem Ausführungsbeispiel, in dem eine Überwachungs- und Steuervorrichtung gemessene Ströme berücksichtigt ist es durchaus vorstellbar, dass die Überwachungs- und Steuervorrichtung den von mindestens einer der Strommesseinrichtungen gemessenen Strom mit gespeicherten Sollprofilen vergleicht und daraus Informationen über Funktionszustand, Fehlfunktion, Alterung, Abnutzung, Belastung und/oder ähnliches des Gleichstrommotors und/oder der Haltebremse ermittelt. Somit kann die Überwachungs- und Steuervorrichtung neben der reinen Steueraufgabe auch Analysen über Verschleiß, Fehlfunktion, Belastung etc. des Motors und der Bremse ermitteln und in der Steuerung berücksichtigen bzw. weitermelden.

Im Folgenden wird die Erfindung, an Hand lediglich Ausführungsbeispiele zeigender Zeichnungen, näher erläutert. Die Figuren zeigen elektrische Schaltungen mehrerer Ausführungsbeispiele, wobei lediglich ausführungsrelevante Bestandteile der Ansteuerschaltung dargestellt sind. Weitere typische Schaltungsbestandteile, die für einen ausführbaren Schaltungsentwurf nötig wären, wie beispielsweise Gleichrichtschaltung zur Netzspannungsversorgung für den Zwischenkreis, Freilaufdioden für die IGBTs, Vorladeschaltung für den Glättungs- und Pufferkondensator des Zwischenkreises oder weitere dem Fachmann bekannte schaltungstypische Bestandteile sind in den Figuren aus Übersichtlichkeitsgründen nicht dargestellt, müssen jedoch für eine vollständige schaltungstechnische Realisierung hinzugedacht werden.

Es zeigen:
- **Fig. 1**: ein Schaltungsentwurf eines ersten Ausführungsbeispiels einer Ansteuerschaltung;
- **Fig. 2**: ein Schaltungsentwurf einer zweiten Ausführungsform;
- **Fig. 3**: ein Schaltungsentwurf einer dritten Ausführungsform;
- **Fig. 4**: ein Schaltungsentwurf einer vierten Ausführungsform.

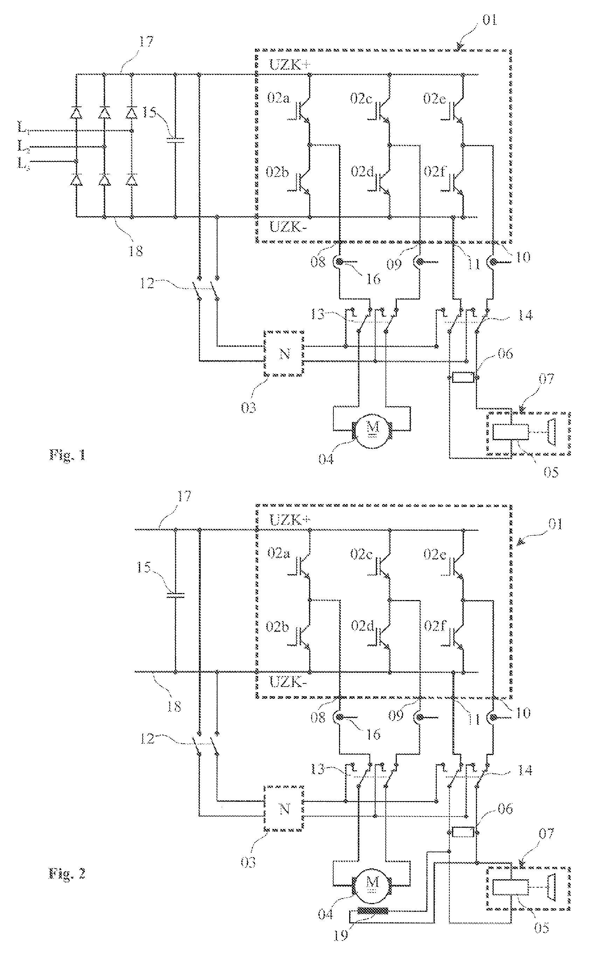

**Fig. 1** zeigt die Topologie und elektrische Verschaltung eines erfindungsgemäßen Ausführungsbeispiels.

Der Zwischenkreis der Ansteuerschaltung kann hierbei über eine Netzspannung gespeist werden. Hierzu können - nicht dargestellt -die drei Phasen einer Drehstromnetzversorgung über einen Brückengleichrichter, der sechs Dioden umfasst, gleichgerichtet werden, so dass diese die beiden Zwischenkreispotentiale UZK+ und UZK- versorgen. Als Gleichrichterschalung sind jedoch auch elektronische Schaltnetzteile, transformatorische Gleichspannungsnetzteile oder andere übliche Gleichrichterschaltungen denkbar. Anstelle einer 3-Phasen Drehstromnetzes kann auch eine 1-Phasen-Wechselspannung gleichgerichtet werden, um den Zwischenkreis mit Spannung zu versorgen.
Diese Zwischenkreis-Gleichspannung wird als Zwischenkreispotentiale 16 und 17 an den Dreibrücken-Wechselrichter 01 geleitet. Ein Zwischenkreiskondensator 15 dient der Glättung der gleichgerichteten Spannung.

Der Dreibrücken-Wechselrichter 01 umfasst drei Halbbrücken, die jeweils aus zwei Leistungsschaltelementen 02 bestehen, die in Reihe zwischen den beiden Zwischenkreispotentialen 16 und 17 geschaltet sind. Zwischen den beiden Leistungsschaltelementen 02 jeder Haltebrücke sind durch Abgriff die Wechselrichteranschlüsse U, V, und W nach außen geführt. Die Leistungsschaltelemente 02a und 02b stellen dabei eine Halbbrücke dar, ebenso die beiden Leistungsschaltelemente 02c, 02d sowie 02e, 02f. Des Weiteren weist der Dreibrücken-Wechselrichter 01 eine Klemme des Gleichspannungspotentials UZK- 11 auf. Durch geeignete Ansteuersignale der einzelnen Leistungsschaltelemente können beliebige Spannungssignale an den Wechselrichteranschlussausgängen U, V und W in Bezug aufeinander, oder in Bezug auf die Zwischenkreispotentiale erzeugt werden. Wird beispielsweise für den Betrachtungszeitraum Transistor 2a dauernd eingeschaltet und die Transistoren 2b und 2c dauernd ausgeschaltet, so kann zum Beispiel durch entsprechende pulsweitenmodulierte Ansteuersignale an Transistor 2d eine definierte mittlere Differenzspannung an den Ausgängen U und V erzeugt werden. Werden die beiden Ausgänge U und V an einen Gleichstrommotor angeschlossen, so wird sich ein geglätteter mittlerer Gleichstrom durch die Wicklungen des Motors 04 einstellen. Für einen Weiteren Betrachtungszeitraum ist es zum Beispiel möglich, einen Gleichstrom mit zu dem im erstgenannten Beispiel umgekehrten Vorzeichen zu erzeugen, in dem Transistor 2c dauernd ein-/ die Transistoren 2a und 2d dauernd ausgeschaltet sind und eine pulsweitenmodulierten Ansteuerung des Transistors 2b vorgenommen wird.

Des Weiteren umfasst die in **Fig. 1** dargestellte Ansteuerschaltung eine Notbetriebversorgungseinrichtung 03. Diese ist über ein Netz-Schaltelement 12 mit den Zwischenkreispotentialen 16 und 17 verbunden, dabei ist das Netz-Schaltelement 12 im Normalbetrieb geöffnet. Im Falle eines geschlossenen Netz-Schaltelements 12 kann bei anliegender Netzspannung die Notbetriebversorgungseinrichtung 03 aufgeladen werden oder beispielsweise beim Ausfall der Netzspannung den Zwischenkreis mit Hilfe der Notbetriebversorgungseinrichtung 03 mit Spannung versorgt werden, so dass der angeschlossene Gleichstrommotor 04 und die Haltebremse 07 über den Dreibrücken-Wechselrichter 01 betrieben werden kann.

Der Gleichstrommotor 04 ist mit seinen beiden Klemmen über ein Notbetrieb-Motor-Umschaltelement 13 zum einen mit den Ausgängen U und V des Dreibrücken-Wechselrichters 01, zum anderen mit den Notbetriebpotentialen der Notbetriebversorgungseinrichtung 03 verbunden.

Die Haltebremse 07 ist mit ihren beiden Klemmen über ein Notbetrieb-Bremse-Umschaltelement 14 mit einem Ausgang W des Dreibrücken-Wechselrichters 01 sowie mit dem Zwischenkreis-Potentialausgang 11 verbunden und über das Notbetrieb-Bremse-Umschaltelement 14 des Weiteren mit den Notbetriebspotentialen der Notbetriebversorgungseinrichtung 03. Parallel zur Haltebremse 07 ist eine Haltebremseschutzbeschaltung 06 angeschlossen, die die Haltebremse 07 vor Überlastung schützt. Die Haltebremse 07 umfasst eine Haltebremsemagnetspule 05. Mit dieser Konfiguration ist es insbesondere möglich, die mittlere Spulenspannung oder die Spulenströme der Haltebremse 07 auch bei zeitlich veränderten Sollwertprofilen vorzugeben. So ist beispielsweise durch eine Anhebung des Stroms zu Beginn der Ansteuerung ein schnelleres und sicheres Lösen der Bremse möglich, während für das Halten der Bremse nur ein reduzierter Strom erforderlich ist. Die Schutzbeschaltung 06 schützt dabei die Haltebremsenmagnetspule 05 der Haltebremse 07 vor Überspannungen aufgrund von Schaltungsvorgängen oder parasitären Induktivitäten.

In der dargestellten Konfiguration sind an den Wechselrichteranschlussausgängen U, V und W Strommesseinrichtungen 08, 09 und 10 nachgeschaltet, die die abgehenden Ströme zum Gleichstrommotor und zur Haltebremse im Normalbetrieb messen. Mit Hilfe der Strommesseinrichtungen 08, 09 und 10 sind somit Überlastungen, Fehlverhalten und weitere Betriebsparameter von Haltebremse 07 (durch Strommesseinrichtung 10) und Motor 04 (durch die Strommesseinrichtungen 08, 09) feststellbar.

Im Normalbetrieb, das heißt bei angelegter Netzspannung und funktionierendem Dreibrücken-Wechselrichter 01, ist das Netz-Schaltelement 12 geöffnet oder, falls die Notbetriebversorgungseinrichtung 03 aufgeladen werden muss, geschlossen, um die aufladbare Gleichspannungsquelle der Notbetriebversorgungseinrichtung 03 mit Hilfe der Zwischenkreis-Potentialspannung UZK+ 16, UZK- 17 aufzuladen. Die beiden Umschaltelemente 13 und 14 des Gleichstrommotors 04 und der Haltebremse 07 verbinden diese Verbraucher mit den Wechselrichteranschlussklemmen U, V, W sowie die Haltebremse 07 mit dem Zwischenkreispotential UZK- über die Klemme 11. Der Motor 04 ist dabei zwischen den Halbbrücken 02a-02b und 02c-02d geschaltet, und die Haltebremse 07 unabhängig vom Motor 04 mit der Halbbrücke 02e-02f und dem Zwischenkreispotential UZK- angeschlossen.

Tritt eine Störung, zum Beispiel ein Ausfall des Versorgungsnetzes auf, so kann das Notbetrieb-Netz-Schaltelement 12 geschlossen werden und die Notbetriebversorgungseinrichtung 03 kann den Zwischenkreis 17, 18 mit Spannung versorgen. In diesem Fall bleiben die beiden Umschaltelemente 13 und 14 in ihrer bisherigen Schaltposition und Motor 04 und Haltebremse 07 bleiben mit dem Dreibrücken-Wechselrichter 01 verbunden.

Wird jedoch beispielsweise durch die Strommesseinrichtungen 08, 09, und/oder 10 festgestellt, dass der Wechselrichter 01 ausgefallen ist, wie es bei einem Blitzschlag vorkommen kann, so können die beiden Notbetriebsumschaltelemente 13 des Motors 04 und 14 der Haltebremse 07 auf die Notbetriebspotentiale der Notbetriebversorgungseinrichtung 03 umschalten. Somit ist der Dreibrücken-Wechselrichter 01 von den beiden elektrischen Verbrauchern, Motor 04 und Haltebremse 07, entkoppelt. Wird dabei zusätzlich die Notbetriebversorgungseinrichtung 03 durch das Notbetrieb-Netz-Schaltelement 12 von den Zwischenkreispotentialen 16 und 17 getrennt, so kann ein gefahrloser Austausch des Dreibrücken-Wechselrichters 01 ohne Eingriff in den Betrieb der Rotorverstellvorrichtung vorgenommen werden.

Im Normalbetrieb ist das Notbetrieb-Netz-Schaltelement 12 geöffnet, um die Notbetriebversorgungseinrichtung 03 vom Zwischenkreis abzukoppeln. Des Weiteren bleibt das Notbetrieb-Netz-Schaltelement 12 in der Anfahrphase der Ansteuerschaltung sowie nach Abschluss einer Betriebsumschaltung von Not- in Normalbetrieb geöffnet. Lediglich im Fall eines Notbetriebs, bei dem Gleichstrommotor 04 und/oder Haltebremse 07 über den Dreibrücken-Wechselrichter 01 angesteuert werden, sowie im Aufladebetrieb, wenn die Notbetriebversorungseinrichtung 03 über den Zwischenkreis 16, 17 aufgeladen wird, ist das Notbetrieb-Netz-Schaltelement 12 geschlossen.

Das Notbetrieb-Motor-Umschaltelement 13 verbindet im Normalbetrieb sowie im Notbetrieb über den Dreibrücken-Wechselrichter 01 den Gleichstrommotor 04 mit den Ausgangsklemmen des Dreibrücken-Wechselrichters 01. Im Falle eines Notbetriebs bei direkter Ansteuerung des Gleichstrommotors 04 durch die Notbetriebversorgungseinrichtung 03 schaltet das Notbetrieb-Motor-Umschaltelement 13 die Versorgungsklemmen des Gleichstrommotors 04 auf die Notbetriebspotentiale der Notbetriebsversorgungseinrichtung 03 um.

Das Notbetrieb-Bremse-Umschaltelement 04 versorgt im Normalbetrieb und im Notbetrieb unter Verwendung des Dreibrücken-Wechselrichters 01 die Haltebremse 07 mit Strom des Dreibrücken-Wechselrichters 01. Lediglich im Notbetrieb unter Umgehung des Dreibrücken-Wechselrichters 01, d.h. bei direkter Ansteuerung durch die Notbetriebversorgungseinrichtung 03, schaltet das Notbetrieb-Bremse-Umschaltelement 04 die Anschlüsse der Haltebremse 07 auf die Notbetriebspotentiale der Notbetriebversorgungseinrichtung 03 um.

Eine Überwachungs- und Steuervorrichtung, die in diesem Bild nicht dargestellt ist, kann unter Berücksichtigung der Ströme, die durch die Strommesseinrichtungen 08, 09 und 10 festgestellt werden, den Haltestrom der Bremse 07 sowie den Betriebsstrom des Motors 04 überwachen und somit die Ansteuerung der Halbbrücken-Leistungsschaltelemente 02 regeln, um einen optimalen Betrieb der Verstellvorrichtung zu gewährleisten.

Im Fall eines kurzzeitigen oder längeren Netzausfalles ist durch eine rückwärtige Versorgung des Zwischenkreises über das Notbetrieb-Netz-Schaltelement 12 durch die Notbetriebversorgungseinrichtung 03 eine Aufrechterhaltung aller vorteilhaften Eigenschaften des Antriebssystems, wie zum Beispiel Regelung des Motorstroms oder dynamische Regelung des Spulenstroms der Haltebremse 07 möglich. Bei Ausfall des Dreibrücken-Wechselrichters 01 oder der Ansteuerelektronik der Überwachungs- und Steuerungsvorrichtung, kann ein Notbetrieb dadurch realisiert werden, dass bei geöffnetem Notbetrieb-Netz-Schaltelement 12 und auf die Notbetriebpotentialkreis geschalteten Umschaltelementen 13 und 14 zumindest ein geordnetes Verfahren der Antriebsvorrichtung in eine sichere Stillstandsposition ermöglicht wird. Aus Gründen der Zuverlässigkeit kann es dabei sinnvoll sein, für diesen Notbetrieb eine autarke Elektronik, zum Beispiel als Bestandteil der Notbetriebsversorgungseinrichtung 03 vorzusehen, die zumindest im Fehlerfall die Funktion der gewöhnlichen Steuerelektronik, die der Ansteuerung der Halbbrücken des Dreibrücken-Wechselrichters 01 dient, übernimmt und selbständig eine Ansteuerung der Schalt- und Umschaltelemente 12, 13 und 14 vornimmt. Sie kann des Weiteren die Steuerung der Leistungsschaltelemente 02 des Dreibrücken-Wechselrichters 01 vornehmen. Weitere Zusatzschaltungen, die zum Beispiel eine Strombegrenzung oder Regelung nach Schließen der Umschaltkontakte 12, 13 oder 14 sicherstellen, sind aus Gründen der Übersichtlichkeit nicht dargestellt.

In **Fig. 2** ist eine weitere alternative Ausführungsform einer Ansteuerschaltung dargestellt. Dabei entspricht der obere Teil der Ansteuerschaltung, die den Dreibrücken-Wechselrichter 01, den Zwischenkreis mit den Potentialen 16 und 17, den Zwischenkreiskondensator 15, sowie die Notbetriebversorgungseinrichtung 03, das Schaltelement 12, die Umschaltelemente 13 und 14 und die Strommesseinrichtungen 08, 09 und 10 umfassen, dem Teil der in **Fig. 1** dargestellten Topologie. Aus Gründen der Übersichtlichkeit ist die Gleichrichterbrückenschaltung zur Versorgung des Zwischenkreises durch die drei Phasen des Vorsorgungsnetzes nicht dargestellt.

Hauptaugenmerk bei der Beschreibung dieser Topologie wird auf die Beschaltung des Motors 04 in Bezug auf die Gleichstrombremse 07 und die zusätzliche Motor-Nebenschlusswicklung 18 gelegt. Der Gleichstrommotor 04 ist ebenso wie in der Ausführungsform in **Fig. 1** über das Notbetrieb-Motor-Umschaltelement 13 mit den beiden Halbbrücken 02a-02b und 02c-02d des Dreibrücken-Wechselrichters 01 verbunden. Er ist des Weiteren mit einer Nebenschlusswicklung 18 ausgestattet, die parallel zur Haltebremse 07 angeschlossen ist. Die Nebenschlusswicklung 18 des Motors 04 ist damit bei geöffnetem, das heißt bestromten Zustand der Haltebremse 07 aktiv. Dabei können nicht dargestellte zusätzliche Komponenten in Reihe, oder parallel zur Nebenschlusswicklung und auch zur Haltebremsenmagnetspule 05 der Haltebremse 07 geschaltet werden, zusätzlich zur Haltebremsenschutzbeschaltung 06. Beispielsweise ist eine Anpassung der Nennspannung der Haltebremsenmagnetspule 05 auf die notwendige Betriebsspannung der Nebenschlusswicklung 18 denkbar. Dabei kann die Nebenschlusswicklung 18, ähnlich einer fremderregten Wicklung eines Gleichstrommotors betrieben werden und unabhängig von der Betriebsspannung des Gleichstrommotors 04 erregt werden. Somit ergibt sich ein hoher Grad an schallungstechnischer Flexibilität beim Betrieb des Gleichstrommotors 04, da seine Nebenschlusswicklung 18 nur von der Betriebsspannung der Haltebremse 07 abhängt. Damit ist ein weiterer schallungstechnischer Freiheitsgrad beim Betrieb des Gleichstrommotors 04 gegeben.

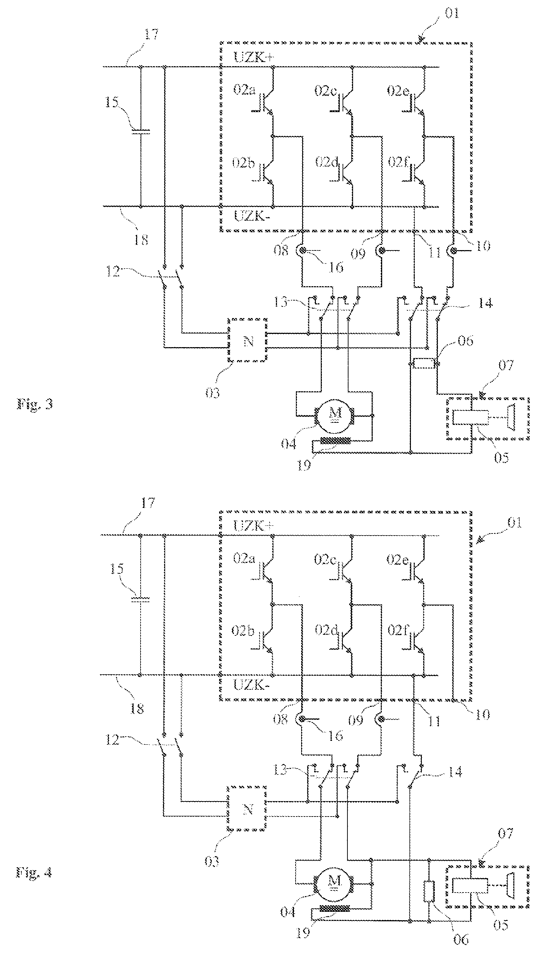

Die in **Fig. 3** dargestellte Ausführungsform unterscheidet sich von den in **Fig. 1** und **Fig. 2** dargestellten Ausführungsformen hinsichtlich der Beschaltung der Gleichstromnebenschlusswicklung 18 des Gleichstrommotors 04. In der in **Fig. 3** dargestellten Realisierung ist eine Klemme der Nebenschlusswicklung 18 an einer Klemme des Gleichstrommotors 04 angeschlossen und die zweite Klemme der Nebenschlusswicklung 18 an der Gleichstrompotentialklemme der Haltebremsemagnetspule 05 der Haltebremse 07 angeschlossen. Somit liegt die Nebenschlusswicklung 18 zwischen dem Abgriff V der durch die beiden Leistungsschaltelemente 02c und 02d gebildeten Halbbrücke des Wechselrichters 01 und der Klemme 11 des Zwischenkreispotentials UZK- 18. Ihr Verhalten hängt dabei direkt von dem Ansteuerverhalten des Gleichstrommotors 04, und damit von der Potentialdifferenz zwischen den Klemmen V und 11 des Dreibrücken-Wechselrichters 01 ab. In diesem Fall kann die Haltebremse 07 unabhängig von der Motor-Nebenschlusswicklung 18 betrieben werden. Somit lässt sich in gewissen Bereichen der Motor 04, die Nebenschlusswicklung 18 und die Haltebremse 07 unabhängig voneinander ansteuern und regeln.

In einem letzten dargestellten Ausführungsbeispiel in **Fig. 4** sind sowohl Gleichstrommotor 04 als auch Nebenschlusswicklung 18 und Haltebremse 07 zumindest mit einer Klemme an der durch die beiden Leistungsschaltelemente 02c und 02d gebildeten Halbbrücken des Dreibrücken-Wechselrichters 01 über die Klemme V angeschlossen. Dabei ist entsprechend dem in **Fig. 3** dargestellten Ausführungsbeispiel die zweite Klemme der Motor-Nebenschlusswicklung 18 und die zweite Klemme der Haltebremse 07 über das Notbetrieb-Bremse-Umschaltelement 14 über die Klemme 11 mit dem Zwischenkreispotential UZK- 18 verbunden. Der Vorteil dieser Ausführungsform liegt darin, dass lediglich zwei Halbbrücken des Dreibrücken-Wechselrichters zum Betrieb von Gleichstrommotor 04, Nebenschlusswicklung 18 und Haltebremse 07 benötigt werden, so dass die durch die beiden Leistungsschaltelemente 02e und 02f gebildete Halbbrücke unbenutzt bleibt und daher für weitere Steuer- oder Regelungsaufgaben zur Verfügung steht. In dieser Ausführungsform hängt das Verhalten der Haltebremse 07 und der Motor-Nebenschlusswicklung 18 von einer der beiden Versorgungsleitungen des Gleichstrommotors 04 in Bezug auf das Potential UZK- ab. Ein völlig unabhängiger Betrieb der drei Bauelemente ist dadurch nur eingeschränkt möglich, jedoch ergibt sich der Vorteil einer zur freien Verfügung stehenden Halbbrücke.

Im Hinblick auf die zugrunde liegende erfinderische Idee sind weitere Anschlussvarianten denkbar, so beispielsweise, ausgehend von der in **Fig. 4** dargestellten Schaltungskonfiguration, der Anschluss eines zweiten Gleichstrommotors oder weiterer zusätzlicher Verbraucher an den Abgriff W der unbenutzten Halbbrücke 02e-02f. Des Weiteren ist es sehr wohl denkbar, dass der Gleichstrommotor nur mit einer Klemme an einer Halbbrücke angeschlossen ist und beispielsweise über ein Umschaltelement mit der anderen Klemme entweder mit dem Zwischenkreispotential UZK- 17 oder mit dem Zwischenkreispotential UZK+ 16 verbunden ist, so dass ein Links-, Rechtsbetrieb des Motors durch Zwischenschaltung eines Polwendeelements realisierbar ist und eine Ansteuerung bezüglich der Höhe der Betriebsspannung durch gezielte Beeinflussung der Halbbrücke möglich wäre. Hierdurch würde eine weitere Halbbrücke des Dreibrücken-Wechselrichters eingespart, diese könnte für zusätzliche Regelungs- oder Steueraufgaben verwendet werden. Weitere Schaltungsvariationen in dieser Art sind denkbar.

## Patentansprüche

1. Ansteuerschaltung zum Betrieb eines Gleichstrommotors (04) mit elektrisch betätigter Haltebremse (07), insbesondere für die Verstellung eines Rotorblatts einer Wind- oder Wasserkraftanlage, die eine Notbetriebversorgungseinrichtung (03) und einen Dreibrücken-Wechselrichter (01) umfasst,
**gekennzeichnet dadurch,**
**dass** die Notbetriebversorgungseinrichtung (03) über ein Notbetrieb-Netz-Schaltelement (12) mit dem Zwischenkreis (16, 17) des Dreibrücken-Wechselrichters (01) freischaltbar verbunden ist, dass der Gleichstrommotor (04) über ein Notbetrieb-Motor-Umschaltelement (13) entweder mit dem Dreibrücken-Wechselrichter (01) oder mit der Notbetriebversorgungseinrichtung (03) verbunden ist, und dass die Haltebremse (07) über ein Notbetrieb-Bremse-Umschaltelement (14) entweder mit dem Dreibrücken-Wechselrichter (01) oder mit der Notbetriebversorgungseinrichtung (03) verbunden ist.

2. Ansteuerschaltung nach Anspruch 1,
**dadurch gekennzeichnet,**
**dass** die Notbetriebversorgungseinrichtung (03) eine oder mehrere Batterien umfasst.

3. Ansteuerschaltung nach Anspruch 1,
**dadurch gekennzeichnet,**
**dass** die Notbetriebversorgungseinrichtung (03) eine aufladbare Gleichstromquelle, insbesondere eine oder mehrere Akkumulatoren, Kondensatoren oder ähnliches umfasst.

4. Ansteuerschaltung nach Anspruch 3,
**dadurch gekennzeichnet,**
**dass** die Notbetriebversorgungseinrichtung (03) über das Notbetrieb-Netz-Schaltelement (12) aufgeladen werden kann.

5. Ansteuerschaltung nach einem oder mehreren der vorhergehenden Ansprüche,
**dadurch gekennzeichnet,**
**dass** die Notbetriebversorgungseinrichtung (03) über das Notbetrieb-Netz-Schaltelement (12) rückwärtig direkt, oder über weitere Bauteile gekoppelt, den Zwischenkreis (16, 17) des Dreibrücken-Wechselrichters (01) versorgen kann.

6. Ansteuerschaltung nach einem oder mehreren der vorhergehenden Ansprüche,
**dadurch gekennzeichnet,**
**dass** die Ansteuerschaltung des weiteren eine Überwachungs- und Steuervorrichtung umfasst, die mit mindestens einem der Schaltelemente Notbetrieb-Netz-Schaltelement (12), Notbetrieb-Motor-Umschaltelement (13), Notbetrieb-Netz-Schaltelement (12) verbunden ist, und zumindest eine der Funktionen Energiezufuhr der Notbetriebversorgungseinrichtung (03) zu- und von dem Zwischenkreis (16, 17) des Wechselrichters (01), Energiezufuhr des Gleichstrommotors (04), Energiezufuhr der Haltebremse (07) steuert.

7. Ansteuerschaltung nach Anspruch 6,
**dadurch gekennzeichnet,**
**dass** die Überwachungs- und Steuervorrichtung des weiteren mit dem Dreibrücken-Wechselrichters 01 verbunden ist, um diesen zu steuern.

8. Ansteuerschaltung nach Anspruch 6 oder 7,
**dadurch gekennzeichnet,**
**dass** die Überwachungs- und Steuervorrichtung in der Notbetriebversorgungseinrichtung (03) integriert ist.

9. Ansteuerschaltung nach einem der Ansprüche 6 bis 8,
**dadurch gekennzeichnet,**
**dass** die Überwachungs- und Steuervorrichtung des Weiteren eine Fernmeldeeinrichtung zum Empfang und Senden von Informationen an eine Fernüberwachungs- und Steuerungsstelle umfasst.

10. Ansteuerschaltung nach einem oder mehreren der vorhergehenden Ansprüche,
**dadurch gekennzeichnet,**
**dass** der Gleichstrommotor (04) über das Notbetrieb-Motor-Umschaltelement (13) mit zwei Halbbrücken des Dreibrücken-Wechselrichters (01) verbunden werden kann.

11. Ansteuerschaltung nach einem oder mehreren der vorhergehenden Ansprüche,
**dadurch gekennzeichnet,**
**dass** zumindest ein Anschluss der Haltebremse (07) über das Notbetrieb-Bremse-Umschaltelement (14) mit einem Zwischenkreispotential (16, 17) verbunden werden kann.

12. Ansteuerschaltung nach einem oder mehreren der vorhergehenden Ansprüche,
**dadurch gekennzeichnet,**
**dass** zumindest ein Anschluss der Haltebremse (07) über das Notbetrieb-Bremse-Umschaltelement (14) mit einer Halbbrücke des Dreibrücken-Wechselrichters (01) verbunden werden kann.

13. Ansteuerschaltung nach Anspruch 12,
**dadurch gekennzeichnet,**
**dass** die Halbbrücke des Dreibrücken-Wechselrichters (01), die mit der Haltebremse (07) verbunden ist, unabhängig von den beiden Halbbrücken des Dreibrücken-Wechselrichters (01), die mit dem Gleichstrommotor (04) verbunden sind, geschaltet werden kann.

14. Ansteuerschaltung nach Anspruch 12,
**dadurch gekennzeichnet,**
**dass** die Halbbrücke des Dreibrücken-Wechselrichters (01), die mit der Haltebremse (07) verbunden ist, eine der Halbbrücken des Dreibrücken-Wechselrichters (01) ist, die mit dem Gleichstrommotor (04) verbunden sind.

15. Ansteuerschaltung nach einem oder mehreren der vorhergehenden Ansprüche,
**dadurch gekennzeichnet,**
**dass** parallel und/oder in Reihe zur Haltebremse (07) weitere Bauelemente, insbesondere eine Haltebremseschutzbeschaltung (06) geschaltet ist.

16. Ansteuerschaltung nach einem oder mehreren der vorhergehenden Ansprüche 12 bis 15,
**dadurch gekennzeichnet,**
**dass** die Haltebremse (07) beim Betrieb über den Wechselrichter (01) mit einem zeitlich veränderlichen Spannungsmittelwert, insbesondere mit einer pulsweitenmodulierten Spannung, betrieben wird.

17. Ansteuerschaltung nach einem oder mehreren der vorhergehenden Ansprüche,
**dadurch gekennzeichnet,**
**dass** die Ansteuerschaltung des Weiteren mindestens eine Strommesseinrichtung (08, 09, 10) umfasst.

18. Ansteuerschaltung nach Anspruch 17
**dadurch gekennzeichnet,**
**dass** mindestens eine Strommesseinrichtung (08, 09, 10) in dem Dreibrücken-Wechselrichter 01 integriert ist.

19. Ansteuerschaltung nach einem der Ansprüche 6 bis 9 und Anspruch 17 oder 18,
**dadurch gekennzeichnet,**
**dass** mindestens eine Strommesseinrichtung (08, 09, 10) mit der Überwachungs- und Steuervorrichtung zur Steuerung des Wechselrichters (01) und/oder des Notbetrieb-Netz-Schaltelements (12), und/oder des Notbetrieb-Motor-Umschaltelements (13) und/oder des Notbetrieb-Bremse-Umschaltelements (14) verbunden ist.

20. Ansteuerschaltung nach Anspruch 19,
**dadurch gekennzeichnet,**
**dass** eine Strommesseinrichtung (08, 09, 10) den Strom der Haltebremse (07) misst, so dass eine Regelung des Ansteuerstromes der Haltebremse (07) durch die Überwachungs- und Steuervorrichtung möglich ist.

21. Ansteuerschaltung nach einem oder mehreren der vorhergehenden Ansprüche,
**dadurch gekennzeichnet,**
**dass** der Gleichstrommotor (04) eine Motor-Nebenschlusswicklung (18) umfasst.

22. Ansteuerschaltung nach Anspruch 21,
**dadurch gekennzeichnet,**
**dass** die Motor-Nebenschlusswicklung (18) parallel zur Haltebremse (07) geschaltet ist.

23. Ansteuerschaltung nach Anspruch 21 oder 22,
**dadurch gekennzeichnet,**
**dass** die Motor-Nebenschlusswicklung (18) als fremderregte Wicklung des Gleichstrommotors (04) geschaltet ist.

24. Ansteuerschaltung nach einem der Ansprüche 21 bis 23,
**dadurch gekennzeichnet,**
**dass** die Motor-Nebenschlusswicklung (18) zwischen einem Anschluss des Gleichstrommotors (04) und einem Anschluss der Haltebremse (07) geschaltet ist.

25. Ansteuerschaltung nach einem der Ansprüche 21 bis 24,
**dadurch gekennzeichnet,**
**dass** zusätzliche Bauelemente in Reihe und/oder parallel zur Motor-Nebenschlusswicklung (18) geschaltet sind.

26. Ansteuerschaltung nach einem oder mehreren der vorhergehenden Ansprüche,
**dadurch gekennzeichnet,**
**dass** der Gleichstrommotor (04) einen Feldgleichrichter umfasst.

27. Ansteuerschaltung nach einem oder mehreren der vorhergehenden Ansprüche,
**dadurch gekennzeichnet,**
**dass** der Dreibrücken-Wechselrichter (01) Teil eines Spannungszwischenkreisumrichters oder Servoreglers ist.

28. Ansteuerschaltung nach einem oder mehreren der vorhergehenden Ansprüche,
**dadurch gekennzeichnet,**
**dass** jede Halbbrücke des Wechselrichters (01) mindestens zwei Insulated Gate Bipolar Transistoren (IGBT) als Leistungsschaltelemente (02) umfasst.

29. Verfahren zum Betrieb einer Ansteuerschaltung nach einem oder mehreren der vorhergehenden Ansprüche,
**dadurch gekennzeichnet,**
**dass** im Normalbetrieb das Notbetrieb-Netz-Schaltelement (12) bedarfsweise zur Aufladung der Notbetriebsversorgungseinrichtung (03) durch den Zwischenkreis (16, 17) geschlossen und ansonsten geöffnet ist, das Notbetrieb-Motor-Umschaltelement (13) den Gleichstrommotor (04) mit dem Dreibrücken-Wechselrichter (01) verbindet, und das Notbetrieb-Bremse-Umschaltelement (14) die Haltebremse (07) mit dem Dreibrücken-Wechselrichter (01) verbindet;
**dass** in einem ersten Notbetrieb, bei dem der Dreibrücken-Wechselrichter (01) verwendet wird, das Notbetrieb-Netz-Schaltelement (12) geschlossen ist, um den Zwischenkreis mit Spannung zu versorgen, das Notbetrieb-Motor-Umschaltelement (13) den Gleichstrommotor (04) mit dem Dreibrücken-Wechselrichter (01) verbindet, und das Notbetrieb-Bremse-Umschaltelement (14) die Haltebremse (07) mit dem Dreibrücken-Wechselrichter (01) verbindet; und dass in einem zweiten Notbetrieb, bei dem der Dreibrücken-Wechselrichter (01) umgangen wird, das Notbetrieb-Netz-Schaltelement (12) geöffnet ist, das Notbetrieb-Motor-Umschaltelement (13) den Gleichstrommotor (04) mit der Notbetriebversorgungseinrichtung (03) verbindet, und das Notbetrieb-Bremse-Umschaltelement (14) die Haltebremse (07) mit der Notbetriebversorgungseinrichtung (03) verbindet.

30. Verfahren nach Anspruch 6 und 29,
**dadurch gekennzeichnet,**
**dass** die Überwachungs- und Steuervorrichtung die Steuerung der einzelnen Betriebsarten Normalbetrieb, erster Notbetrieb und zweiter Notbetrieb vornimmt.

31. Verfahren nach Anspruch 30,
**dadurch gekennzeichnet,**
**dass** die Überwachungs- und Steuervorrichtung des weiteren die Leistungsschaltelemente (02) der Halbbrücken des Dreibrücken-Wechselrichters (01) steuert.

32. Verfahren nach Anspruch 17 und 31
**dadurch gekennzeichnet,**
**dass** die Steuerung der Leistungsschaltelemente (02) unter Berücksichtigung der Messdaten mindestens einer Strommesseinrichtung (08, 09, 10) vorgenommen wird.

33. Verfahren nach Anspruch 17 und einem der Ansprüche 29 bis 32,
**dadurch gekennzeichnet,**
**dass** die Auswahl der einzelnen Betriebsarten Normalbetrieb, erster Notbetrieb und zweiter Notbetrieb unter Berücksichtigung der Messdaten mindestens einer Strommesseinrichtung (08, 09, 10) vorgenommen wird.

34. Verfahren nach Anspruch 17 und einem der Ansprüche 29 bis 33,
**dadurch gekennzeichnet,**
**dass** die Überwachungs- und Steuervorrichtung den von mindestens einer der Strommesseinrichtungen (08, 09, 10) gemessenen Strom mit gespeicherten Sollprofilen vergleicht und daraus Informationen über Funktionszustand, Fehlfunktion, Alterung, Abnutzung, Belastung und/oder ähnliches des Gleichstrommotors und/oder der Haltebremse ermittelt.
